Europäisches Patentamt

European Patent Office

Office européen des brevets

(11) Veröffentlichungsnummer: **0 448 575 B1**

(19)

(12) **EUROPÄISCHE PATENTSCHRIFT**

(45) Veröffentlichungstag der Patentschrift: **01.06.94**

(51) Int. Cl.⁵: **B60T 8/00**

(21) Anmeldenummer: **89913220.3**

(22) Anmeldetag: **16.11.89**

(86) Internationale Anmeldenummer:
**PCT/EP89/01377**

(87) Internationale Veröffentlichungsnummer:
**WO 90/06869 (28.06.90 90/15)**

(54) **BREMSANTIBLOCKIERREGELVERFAHREN.**

(30) Priorität: **14.12.88 DE 3841977**

(43) Veröffentlichungstag der Anmeldung:
**02.10.91 Patentblatt 91/40**

(45) Bekanntmachung des Hinweises auf die
Patenterteilung:
**01.06.94 Patentblatt 94/22**

(84) Benannte Vertragsstaaten:
**AT DE FR GB IT**

(56) Entgegenhaltungen:
**WO-A-88/07466**
**DE-A- 3 610 281**

**Bosch Technische Berichte vol. 7, no. 2,
1980, Stuttgart (DE), Seiten 65-94; Leiber u.a.
"Antiblockiersystem für Personenkraftwagen"**

(73) Patentinhaber: **ROBERT BOSCH GMBH**
**Postfach 30 02 20**
**D-70442 Stuttgart(DE)**

(72) Erfinder: **BEYER, Claus**
**Posenerstrasse 19**
**D-7141 Schwieberdingen(DE)**
Erfinder: **DOMINKE, Peter**
**Rechentshofenerstrasse 9**
**D-7120 Bietigheim-Bissingen(DE)**
Erfinder: **SONNTAG, Eberhard**
**Fleiner Strasse 10**
**D-7000 Stuttgart 40(DE)**

(74) Vertreter: **Kammer, Arno, Dipl.-Ing.**
**ROBERT BOSCH GmbH,**
**Zentralabteilung Patente,**
**Postfach 30 02 20**
**D-70442 Stuttgart (DE)**

# Beschreibung

## Stand der Technik

Aus der DE-OS 36 14 770 ist ein Antiblockierregelsystem bekannt, bei dem die Radverzögerung und der Radschlupf über eine vorgegebene Zeit integriert und die Integrationsergebnisse summiert werden. Übersteigt die Summe einen Grenzwert, so wird ein Druckabbauimpuls erzeugt und die Integrationsergebnisse werden wenigstens teilweise gelöscht; vorzugsweise werden eine vorgegebene Zahl von Meßwerten integriert, wobei beim Berücksichtigen eines neuen Meßwerts der schon am längsten berücksichtigte Meßwert ausgeschlossen wird (Zeitfenster).

## Vorteile der Erfindung

Durch die erfindungsgemäße Ausbildung des Antiblockierreglers wird ein schnell auf entsprechende Fahrzustände reagierender und komfortabler Regler geschaffen, der durch die Merkmale der Unteransprüche noch weitergebildet werden kann.

## Figurenbeschreibung

Anhand der Zeichnung wird ein Ausführungsbeispiel der Erfindung näher erläutert. Es zeigen:
Fig. 1        ein Blockschaltbild des Reglers
Fig. 2 und 3      Details des Reglers

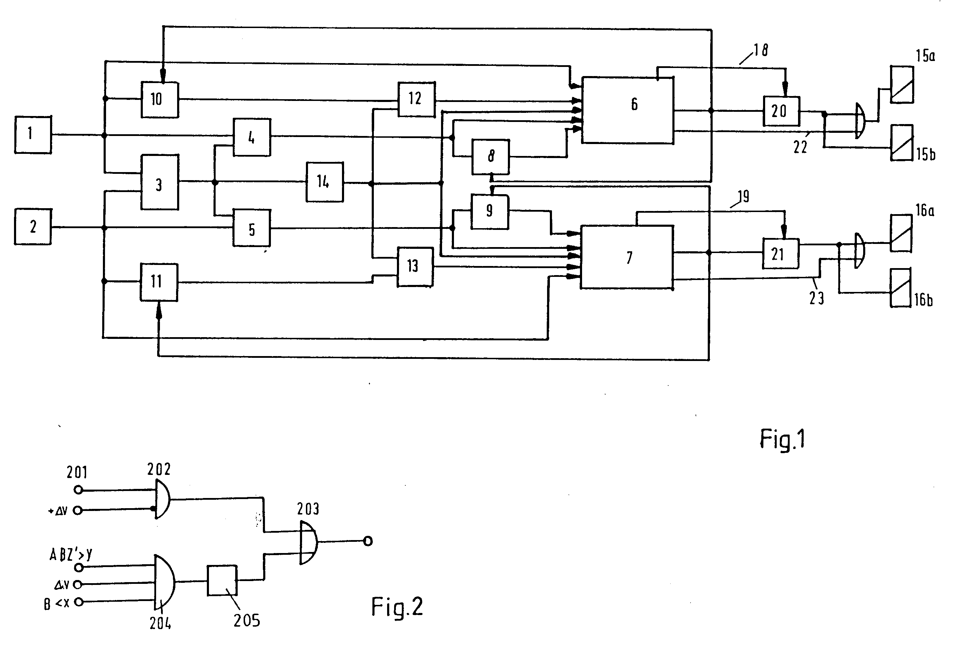

In Fig. 1 sind mit 1 und 2 Meßwertgeber für die Radgeschwindigkeit bezeichnet, die den nicht angetriebenen Rädern zugeordnet sein sollen. Aus den Geschwindigkeitswerten dieser Meßwertgeber 1 und 2 wird in einem Block 3 ein der Fahrzeuggeschwindigkeit $V_F$ angenäherter Geschwindigkeitsverlauf erzeugt. Blöcke 4 und 5, denen sowohl die Radgeschwindigkeitssignale als auch das Fahrzeuggeschwindigkeitssignal zugeführt wird, geben je ein Ausgangssignal ab, das dem Schlupf L des Rads entspricht. Diese Signale werden Rechnern 6 und 7, aber auch Integratoren 8 und 9 zugeführt, die das zugeführte Schlupfsignal integrieren und das Integrationssignal IL ebenfalls den Rechnern 6 bzw. 7 zuführen.

In Differenziergliedern 10 und 11 werden die Radgeschwindigkeitssignale $V_{RR}$ und $V_{RL}$ differenziert; die Ausgangssignale werden dann Subtrahierern 12 und 13 zugeführt, denen auch die in einem Differenzierer 14 differenzierte Fahrzeuggeschwindigkeit $B_F$ zugeführt wird. Diese wird auch den Rechnern 6 und 7 zugeführt. In den Blöcken 12 und 13 wird die relative Radverzögerung B = $B_R$ - $B_F$ für die beiden Räder gebildet und ebenfalls den Rechnern 6 bzw. 7 zugeführt. Die Rechner 6 bzw. 7 erzeugen für das ihnen zugeordnete Rad die Summe aB + bL + cIL + d · BF, wobei a, b, c und d Gewichtungskonstante sind. Übersteigt die Summe einen Instabilitätsgrenzwert IS, so wird, am Ausgang des Rechners 6 bzw. 7 ein Druckabbauimpuls erzeugt, der den den Rädern zugeordneten Ventilen (Einlaßventile 15a bzw. 16a und Auslaßventilen 15b bzw. 16b) zwecks Druckabbau zugeführt wird (beide Ventile 15a und 15b bzw. 16a und 16b werden angesteuert).

Der Druckabbauimpuls wird auch dazu benutzt, die Integrierglieder 8 bzw. 9 und Differenzierglieder 10 bzw. 11 auf Null rückzusetzen. Zwischen den Druckabbauimpulsen wird der Druck konstantgehalten.

Die Breite des ersten Druckabbauimpulses in einem Zyklus wird so bemessen, daß sie einem bestimmten Anteil der Summe ABZ der Druckabbauzeiten des Vorzyklus entspricht. Die Folgeimpulse stellen einen Bruchteil des ersten Impulses dar; die Bemessung wird durch die Rechner 6 bzw. 7 bewirkt. Um eine Linearisierung der Druckabbauzeiten zu erreichen, wird im Rechner 6 bzw. 7 die Summe der Druckabbauzeiten ABZ gemäß der Beziehung ABZ* = ABZ $(1-e^{t/T})$ in eine Ersatzansteuerzeit ABZ* umgewandelt. t ist hierbei die Ansteuerzeit des Auslaßventils und T eine Konstante.

Die Rechner 6 und 7 ermitteln auch in bekannter Weise den Zeitpunkt, an dem die Radgeschwindigkeit vor Erreichen des maximalen Schlupfs ihren Umkehrpunkt erreicht und ändert nun die Instabilitätsbeziehung so, daß diese stärker durch die Radverzögerung und weniger durch die Schlupfanteile bestimmt wird. Die Beziehung kann z.B. lauten K = B + L + IL/2. Sobald der Rechner durch Vergleich aufeinanderfolgender Meßwerte der Radgeschwindigkeit die Tendenz einer Radgeschwindigkeitszunahme erkennt, gibt er über eine Leitung 18 bzw. 19 ein Signal zu einem Tor 20 bzw. 21, das dann die Ansteuerung beider Ventile (Druckabbau) unterbricht. Über Leitung 22 bzw. 23 bleibt jedoch das Einlaßventil 15a bzw. 16a angesteuert (Konstanthaltung).

Die Länge des ersten Impulses im ersten Regelzyklus bemißt der Rechner 6 bzw. 7 vorzugsweise proportional zur Radverzögerung und umgekehrt proportional zur Fahrzeugverzögerung.

Unter bestimmten Bedingungen wird eine Druckabbauverlängerung bis zum Auftreten einer bestimmten Radbeschleunigung +b durchgeführt und zwar dann, wenn trotz einer Tendenz der Radgeschwindigkeitszunahme der Differenzierer 10 bzw. 11 noch einen Verzögerungswert ausgibt, der Differenzierer also nicht nachkommt. Man kann diese Bedingung auch noch davon abhängig machen, ob die bereits aufgelaufene Druckabbauzeit ABZ' einen bestimmten Wert übersteigt. Eine Realisierung dieser Bedingung ist in Fig. 2 gezeigt. Gemäß der Schaltung der Fig. 2 ist im Block 20 bzw. 21 die Druckabbauverlängerung enthalten. Das Abbausignal wird dem Und-Gatter 202 über die Klemme 201 zugeführt. Es gelangt über ein Oder-Gatter 203 zu den Ventilen 14 bzw. 16 bis das Signal $+\Delta v$ (Tendenz Geschwindigkeitszunahme) auftritt.

In dem Sonderfall, daß trotz der Tendenz Geschwindigkeitszunahme ($+\Delta v$ vorhanden) noch eine (kleine) Radverzögerung (B < -X) festgestellt wird und daß schon für wenigstens eine vorgegebene Zeit Druck abgebaut wurde (ABZ' > y) wird durch ein Und-Gatter 204 ein Signal erzeugt, das ein bistabiles Glied 205 setzt. Dieses gibt dann ein Druckabbausignal an das Oder-Gatter 203. Ein auftretendes + b-Signal setzt das bistabile Glied 205 wieder zurück.

Nach einem erfolgten Druckabbau wird der Druck kostantgehalten, bis von einem Stabilitätskriterium $K_{St}$ = f • BR + gL ein Grenzwert ST überschritten wird. B ist hier die absolute Radbeschleunigung, L ist der (negative) Schlupf und f und g sind Konstante.

Der Druckaufbau erfolgt vorzugsweise gepulst und zwar zuerst mit großem und dann mit verringertem Gradienten. Die Zeitdauer, nach der auf den verringerten Gradienten umgeschaltet wird, wird vorzugsweise von der Länge des vorhergehenden Druckabbaus abhängig gemacht und außerdem vom Verhältnis der Druckaufbauzeit zur Druckabbauzeit im Vorzyklus. Die Druckaufbauimpulse auf der Leitung 22 bzw. 23 bemißt der Regler 6 bzw. 7.

Tritt eine sehr hohe Radbeschleunigung auf, so wird ein Druckaufbauimpuls erzeugt, der den vorher vorhandenen Bremsdruck wieder einsteuert.

**Patentansprüche**

1. Antiblockierregelverfahren, bei dem ein Instabilitätsgrenzwert IS vorgegeben wird und eine Summe aus vom Radschlupf und der Radverzögerung abhängigen Signalen mit diesem Grenzwert verglichen wird (in 6, 7) und bei dem bei Überschreiten des Grenzwerts eine Druckabsenkung (Ventile 15, 16) eingeleitet wird, dadurch gekennzeichnet, daß das Instabilitätskriterium K, das mit dem Grenzwert IS (in 6, 7) verglichen wird, durch die Beziehung

   $$K = aB + bL + cIL + d \cdot B_F$$

   bestimmt ist (in 6, 7 gebildet), wobei a, b, c und d Konstante, B die relative Radverzögerung $B = B_{Rad} - B_{Fahrzeug}$, L der Radschlupf, IL das Integral des Radschlupfs und $B_F$ die errechnete Fahrzeugverzögerung ist, daß jeweils mit Erreichen des Instabilitätsgrenzwerts IS ein Druckabbauimpuls mit von der Summe der Abbauzeit ABZ im vorhergehenden Zyklus abhängiger Länge erzeugt wird (in 6, 7) und jeweils der Integralbildner (8, 9) für die Bildung des Signals IL und der für die Bildung des Signals B benötigte Differenzierer (10, 11) rückgesetzt werden, und daß zwischen dem Ende der Druckabbauimpulse und dem erneuten Überschreiten des Instabilitätsgrenzwerts der Druck konstant gehalten wird.

2. Antiblockierregelverfahren nach Anspruch 1, dadurch gekennzeichnet, daß die Dauer des ersten Druckabbauimpulses in einem Zyklus einem bestimmten Anteil der Summe der Druckabbauzeiten des vorhergehenden Zyklus entspricht und daß die Dauer der Folgeimpulse einem Bruchteil der Dauer des ersten Impulses entsprechen.

3. Antiblockierregelverfahren nach Anspruch 1, dadurch gekennzeichnet, daß die Summe der Druckabbauzeiten ABZ des vorhergehenden Zyklus vor Eingehen in die Länge des Druckabbauimpulses nach Maßgabe der Gleichung

   $$ABZ^* = ABZ (1-e^{t/T})$$

   umgewandelt wird, wobei t die Ansteuerzeit des Auslaßventils und T eine an die Hydraulik angepaßte Zeitkonstante ist.

4. Antiblockierregelverfahren nach einem der Ansprüche 1 bis 3, dadurch gekennzeichnet, mit dem Erreichen des Wendepunktes der Radgeschwindigkeit (= Umkehrpunkt der Radverzögerung) vor Erreichen des maximalen Schlupfwerts das Instabilitätskriterium K im Sinne einer Höherbewertung der Radverzögerung B gegenüber den schlupfabhängigen Anteilen geändert wird (in 6, 7).

5. Antiblockierregelverfahren nach einem der Ansprüche 1 bis 4, dadurch gekennzeichnet, daß der Druckabbau abgebrochen wird, sobald eine Tendenz zur Radgeschwindigkeitszunahme erkannt wird (Tore 20, 21).

6. Antiblockierregelverfahren nach einem der Ansprüche 1 bis 5, dadurch gekennzeichnet, daß die Länge des ersten Abbauimpulses des ersten Regelzyklus proportional zur Radverzögerung und umgekehrt proportional zur Fahrzeugverzögerung ist (in 6, 7).

7. Antiblockierregelverfahren nach einem der Ansprüche 1 bis 6, dadurch gekennzeichnet, daß ein Druckabbau bis zum Erreichen einer positiven Schwelle der Radbeschleunigung (+ b) durchgeführt wird, wenn trotz Feststellung einer Tendenz zur Radgeschwindigkeitszunahme die Radbeschleunigung einen vorgegebenen Wert noch unterschreitet (Figur 2).

8. Antiblockierregelverfahren nach Anspruch 7, dadurch gekennzeichnet, daß die Druckabbauverlängerung nur wirksam ist, wenn die Druckabbauzeit eine vorgegebene Dauer überstiegen hat (Figur 2).

9. Antiblockierregelverfahren nach einem der vor-hergehenden Ansprüche, dadurch gekenn-zeichnet, daß nach der Druckabsenkung der Druck konstant gehalten wird, und daß ein Stabilitätsgrenzwert ST vorgegeben ist, mit dem das Stabilitätskriterium $K_{ST}$, das gemäß der Beziehung

$$K_{ST} = f \cdot B_R + g \cdot L$$

gebildet wird, (wobei f und g Konstante sind, $B_R$ die absolute Radbeschleunigung und L der (negative) Bremsschlupf ist), verglichen wird, und daß Druckaufbau ausgelöst wird, wenn der Stabilitätsgrenzwert St überstiegen wird (in 6, 7).

10. Antiblockierregelverfahren nach Anspruch 9, dadurch gekennzeichnet, daß der Druckaufbau gepulst erfolgt.

11. Antiblockierregelverfahren nach Anspruch 10, dadurch gekennzeichnet, daß zu Beginn des Bremsdruckanstiegs eine Erhöhung des Bremsdrucks für eine Zeitdauer mit einem großen Gradienten und danach mit einem geringeren Gradienten bewirkt wird, wobei die Zeitdauer von der Länge des direkt vorhergehenden Druckabbaus abhängig ist, und daß die Zeitdauer zusätzlich von dem Verhältnis der Druckaufbauzeit zu der Druckabbauzeit im vorhergehenden Regelzyklus abhängig ist (in 6, 7).

12. Antiblockierregelverfahren nach Anspruch 11, dadurch gekennzeichnet, daß im ersten Regelzyklus die Zeitdauer von der vorhergehenden Druckabbauzeit abhängig ist.

13. Antiblockierregelverfahren nach einem der Ansprüche 10 bis 12, dadurch gekennzeichnet, daß bei einer sehr hohen Beschleunigung ein Impuls solcher Länge erzeugt wird, daß maximal der vor dem Bremsdruckabbau vorhandene Druck eingesteuert wird.

**Claims**

1. Control method for an antilock brake system, in which an instability limit value IS is specified and a sum formed from signals dependent on the wheel slip and the wheel deceleration is compared with this limit value (in 6, 7) and in which a pressure reduction (valves 15, 16) is initiated when the limit value is exceeded, characterized in that the instability criterion K which is compared with the limit value IS (in 6, 7) is determined by the relation

$$K = aB + bL + cIL + d \cdot B_F$$

(formed in 6, 7), a, b, c and d being constants, B being the relative wheel deceleration B = $B_{Wheel}$ - $B_{Vehicle}$, L being the wheel slip, IL being the integral of the wheel slip and $B_F$ being the calculated vehicle deceleration, in that whenever the instability limit value IS is reached a pressure reduction pulse with a length which is dependent on the sum of the reduction time ABZ in the preceding cycle is produced (in 6, 7) and in each case the integral former (8, 9) for forming the signal IL and the differentiator (10, 11) required to form the signal B are reset, and in that the pressure is kept constant between the end of the pressure reduction pulses and the point at which the instability limit value is exceeded again.

2. Control method for an antilock brake system according to Claim 1, characterized in that the duration of the first pressure reduction pulse in a cycle corresponds to a specific portion of the sum of the pressure reduction times of the preceding cycle, and in that the duration of the subsequent pulses corresponds to a fraction of the duration of the first pulse.

3. Control method for an antilock brake system according to Claim 1, characterized in that, before being included in the length of the pressure reduction pulse, the sum of the pressure reduction times ABZ of the preceding cycle is converted according to the equation

$$ABZ^* = ABZ (1-e^{t/T}),$$

t being the actuation time of the outlet valve and T being a time constant which is matched to the hydraulics.

4. Control method for an antilock brake system according to one of Claims 1 to 3, characterized in that when the turning point of the wheel speed (= point of reversal of the wheel decel-

4

eration) is reached, before the maximum slip value is reached, the instability criterion K is changed to the effect of giving the wheel deceleration B greater weighting in comparison with the slip-dependent portions (in 6, 7).

5. Control method for an antilock brake system according to one of Claims 1 to 4, characterized in that the pressure reduction is terminated as soon as a tendency for the wheel speed to increase is detected (gates 20, 21).

6. Control method for an antilock brake system according to one of Claims 1 to 5, characterized in that the length of the first reduction pulse of the first control cycle is proportional to the wheel deceleration and inversely proportional to the vehicle deceleration (in 6, 7).

7. Control method for an antilock brake system according to one of Claims 1 to 6, characterized in that a pressure reduction is carried out until a positive threshold of the wheel acceleration (+b) is reached, if, despite having detected a tendency for the wheel speed to increase, the wheel acceleration is still less than a specified value (Figure 2).

8. Control method for an antilock brake system according to Claim 7, characterized in that the extension of the pressure reduction time is only effective if the pressure reduction time has exceeded a specified duration (Figure 2).

9. Control method for an antilock brake system according to one of the preceding claims, characterized in that the pressure is kept constant after the pressure reduction, and in that a stability limit value ST is specified with which the stability criterion $K_{ST}$ which is formed according to the relation

$$K_{ST} = f \cdot B_R + g \cdot L$$

(f and g being constants, $B_R$ being the absolute wheel acceleration and L being the (negative) brake slip), is compared, and in that pressure increase is triggered if the stability limit value St is exceeded (in 6, 7).

10. Control method for an antilock brake system according to Claim 9, characterized in that the pressure increase takes place in a pulsed fashion.

11. Control method for an antilock brake system according to Claim 10, characterized in that at the start of the rise in the brake pressure an increase in the brake pressure is brought about with a high gradient for a period of time and subsequently with a lower gradient, the period of time being dependent on the length of the directly preceding pressure reduction, and in that the period of time is additionally dependent on the ratio of the pressure increase time to the pressure reduction time in the preceding control cycle (in 6, 7).

12. Control method for an antilock brake system according to Claim 11, characterized in that in the first control cycle the period of time is dependent on the preceding pressure reduction time.

13. Control method for an antilock brake system according to one of Claims 10 to 12, characterized in that, in the event of a very strong acceleration, a pulse is produced which is of such a length that at maximum the pressure prevailing before the reduction in brake pressure is applied.

**Revendications**

1. Procédé de réglage antiblocage dans lequel une valeur limite d'instabilité IS est prédéfinie, tandis qu'une somme de signaux dépendant du patinage de roues et de la décélération de roues est comparée à cette valeur limite (dans 6, 7) et dans lequel lors du dépassement de la valeur limite, un abaissement de la pression (vannes 15, 16) est amorcé, procédé caractérisé en ce que le critère d'instabilité K qui est comparé à la valeur limite IS (dans 6, 7) est déterminé par la relation (formée en 6, 7) :

$$K = aB + bL + cIL + d \cdot B_F$$

dans laquelle a, b, c, et d sont des constantes, B la décélération relative de la roue $B = B_{Rad} - B_{Fahrzeug}$, L le patinage de la roue, IL l'intégrale du patinage de la roue et $B_F$ la décélération du véhicule obtenue, en ce que respectivement lorsque la valeur limite d'instabilité IS est atteinte, une impulsion de réduction de la pression, avec une longueur dépendant de la somme des temps de réduction ABZ dans le cycle précédent, est obtenue (dans 6, 7) et respectivement le formateur d'intégrale (8, 9) pour la formation du signal IL et le différenciateur (10, 11) nécessaire pour la formation du signal B, sont remis à leur état initial, et en ce qu'entre la fin des impulsions de réduction de la pression et le nouveau dépassement de la valeur limite d'instabilité, la pression est maintenue constante.

2. Procédé de réglage antiblocage selon la revendication 1, caractérisé en ce que la durée de la première impulsion de réduction de la pression dans un cycle correspond à une fraction déterminée de la somme des temps de réduction de la pression du cycle précédent et en ce que la durée des impulsions suivantes correspond à une fraction de la durée de la première impulsion.

3. Procédé de réglage antiblocage selon la revendication 1, caractérisé en ce que la somme des temps de réduction de la pression ABZ du cycle précédent, avant d'intervenir sur la longueur de l'impulsion de réduction de la pression, est convertie selon l'égalité :

$$ABZ^* = ABZ \, (1 - e^{t/T})$$

dans laquelle t est le temps de commande de la vanne de sortie et T une constante de temps adaptée à l'hydraulique.

4. Procédé de réglage antiblocage selon une des revendications 1 à 3, caractérisé en ce que lorsqu'est atteint le point d'inflexion de la vitesse de la roue ( = point d'inversion de la décélération de la roue) avant d'atteindre la valeur de patinage maximale, le critère d'instabilité K est modifié (en 6, 7) dans le sens d'une évaluation plus élevée de la décélération B de la roue par rapport aux fractions dépendants du patinage.

5. Procédé de réglage d'antiblocage selon une des revendications 1 à 4, caractérisé en ce que la réduction de la pression est interrompue dès qu'une tendance à l'accroissement de la vitesse de la roue est reconnue (tores 20, 21)

6. Procédé de réglage d'antiblocage selon une des revendications 1 à 5, caractérisé en ce que la longueur de la première impulsion de réduction du premier cycle de réglage est proportionnelle à la décélération de la roue et inversement proportionnelle à la décélération du véhicule (en 6, 7).

7. Procédé de réglage d'antiblocage selon une des revendications 1 à 6, caractérisé en ce qu'une réduction de pression est effectuée jusqu'à ce que soit atteint un seuil positif de l'accélération de la roue ( + b), lorsque malgré la constatation d'une tendance à l'accroissement de la vitesse de la roue, l'accélération de la roue reste encore inférieure à une valeur prédéfinie ( figure 2).

8. Procédé de réglage antiblocage selon la revendication 7, caractérisé en ce que la prolongation de la réduction de la pression n'est efficace que lorsque le temps de réduction de la pression a dépassé une durée prédéfinie ( figure 2).

9. Procédé de réglage antiblocage selon une des précédentes revendications, caractérisé en ce que, après l'abaissement de la pression, la pression est maintenue constante, et en ce qu'une valeur limite de stabilité ST est prédéfinie, avec laquelle est comparé le critère de stabilité $K_{ST}$ qui est formé selon la relation :

$$K_{ST} = f \cdot B_R + g \cdot L$$

(dans laquelle f et g sont des constantes, $B_R$ l'accélération absolue de la roue et L le patinage (négatif) du frein) et en ce que l'établissement de la pression est déclenché lorsque la valeur limite de stabilité St est dépassée (en 6, 7).

10. Procédé de réglage antiblocage selon la revendication 9, caractérisé en ce que l'établissement de la pression s'effectue par impulsions.

11. Procédé de réglage antiblocage selon la revendication 10, caractérisé en ce qu'au début de l'augmentation de la pression de freinage, une élévation de la pression de freinage est effectuée pour un laps de temps avec un gradient important et ensuite avec un gradient plus réduit, tandis que la durée de ce laps de temps dépend de la longueur de la réduction de pression directement précédente, et en ce que ce laps de temps est, en outre, dépendant du rapport du temps d'établissement de la pression au temps de réduction de la pression dans le cycle de réglage précédent, (en 6, 7).

12. Procédé de réglage antiblocage selon la revendication 11, caractérisé en ce que dans le premier cycle de réglage, le laps de temps est dépendant du temps de réduction de la pression précédent.

13. Procédé de réglage antiblocage selon une des revendications 10 à 12, caractérisé en ce que pour une accélération très élevée, il est produit une impulsion de longueur telle qu'au maximum, la pression existante avant la réduction de la pression de freinage, est commandée.

Fig.1

Fig.2

EP 0 448 575 B1